# EUROPÄISCHE PATENTANMELDUNG

(11) **EP 2 463 564 A2**
(43) Veröffentlichungstag der Anmeldung: **13.06.2012**
(21) Anmeldenummer: 11192007.0
(22) Anmeldetag: 05.12.2011
(51) Int. Cl.: F16L 9/14, F16L 9/22, F16L 11/00

(54) **Verrohrungssystem und Verfahren zur Herstellung eines Verrohrungssystems**

(30) Priorität: 07.12.2010 DE 102010061083
(71) Anmelder: Gealan Formteile GmbH, 95145 Oberkotzau (DE); Maincor AG, 97424 Schweinfurt (DE)
(72) Erfinder: Braun, Thomas, 95032 Hof (DE); Saunus, Christian, 08223 Grünbach (DE); Stösslein, Christian, 96103 Hallstadt (DE)
(74) Vertreter: Fleuchaus, Michael A.

(57) **Zusammenfassung**

Die Erfindung betrifft ein Verrohrungssystem mit mindestens einem Rohr (1), wobei das Rohr (1) wenigstens eine longitudinale Richtung aufweist, welche der Durchflussrichtung eines das Rohr (1) durchtretenden Mediums im wesentlichen entspricht, und wenigstens einem ersten Rohrumfang, wobei die Wandung des Rohrs (1) in Richtung des ersten Rohrumfangs aus zumindest einem ersten Bereich (2) aus einem thermoplastischen, im wesentlichen unelastischen Kunststoff besteht, und wobei die Wandung des Rohrs (1) in Verlauf entlang des ersten Rohrumfangs zumindest einem zweiten Bereich (2) aufweist, welcher aus einem elastischen Material besteht, und sich der erste und der zweite Bereich (2, 3) im wesentlichen in longitudinaler Richtung des Rohrs (1) erstrecken. Die Erfindung betrifft auch ein Verfahren zur Herstellung eines solchen Verrohrungssystems.

## Beschreibung

Die vorliegende Erfindung betrifft ein Verrohrungssystem. Insbesondere betrifft die vorliegende Erfindung ein Verrohrungssystem welches mindestens ein Rohr aufweist, wobei das Rohr eingerichtet ist eine vereinfachte und dennoch dichte Verbindung zwischen unterschiedlichen Komponenten, beispielsweise durch bloßes Ein- bzw. Aufstecken, herzustellen.

Rohre werden in einer Vielzahl von Anwendungen verwendet, beispielsweise zum Transport verschiedener Medien wie Flüssigkeiten oder Gasen. Verrohrungen die solche Medien über größere Strecken transportieren werden häufig aus einer Mehrzahl einzelner Rohre zusammengesetzt, da eine Produktion eines Rohrs über die Gesamtlänge nicht oder nicht wirtschaftlich möglich ist und zudem logistischer Aufwand vermieden wird.

Das Zusammensetzen erfolgt häufig durch ein Zusammenstecken. In ähnlicher Weise werden Rohre häufig durch ein Ein- oder Aufstecken in bzw. auf Rohranschlussstutzen an andere Gerätschaften angeschlossen, wie beispielsweise Pumpen, Tanks, etc. Die mechanischen Sicherung sowie die Abdichtung dieser Verbindungen erfolgt in der Regel mit Hilfe von Fittings, Flanschen oder Schlauchstellen, was bedeutet das zusätzliche Teile erforderlich sind, die für das Herstellen einer zuverlässigen Verrohrung benötigt werden.

Zusätzliche Teile oder Komponenten bergen das Risiko von Fehlern die beispielsweise bei der Montage auftreten oder aber im Laufe der Zeit entstehen können. Zudem sind solche Verbindungsstellen mitunter materialermüdend und bedürfen für den Fall eines Lösens und Wiederherstellens der Verbindung der Verwendung von Neuteilen, da anderenfalls eine neuerlich sichere und dichte Verbindung nicht gewährleistet werden kann.

Zusatzteile, die zum Verbinden benötigt werden sind außerdem verlierbar oder werden unter Umständen vom Monteur vergessen, so dass nicht nur Verzögerungen in der Montage auftreten können sondern auch die Gefahr von unsicheren und undichten Verbindungen besteht. Schließlich erhöht sich durch die Verwendung von Zusatzelementen der Montageaufwand und damit die Montagezeit ebenso, wie der Ausbildungsaufwand im Rahmen der Herstellung des Montageverbundes.

Alternativ besteht auch die Möglichkeit, Rohrverbindungen von Verrohrungen durch Aufweiten und Schrumpfen der Rohrenden herzustellen. Dies ist jedoch entweder mit einem das Rohrmaterial belastenden Erwärmen und Abkühlen verbunden, so dass hierdurch möglicherweise die Standfestigkeit der Verbindung vermindert wird, oder aber durch die Ausnutzung einer gewissen Elastizität des Materials der Rohrwandung. Im letzteren Fall erfordert die Herstellung einer sicheren und dichten Rohrverbindung allerdings meistens einen erheblichen Kraftaufwand, der bei der Montage möglicherweise nicht zur Verfügung steht oder aber nicht angewendet werden kann.

Der vorliegenden Erfindung liegt daher die Aufgabe zugrunde, ein Verrohrungssystem sowie ein Verfahren zur Herstellung desselben zur Verfügung zu stellen, welches eine vereinfachte Montage von Verrohrungen ohne Zusatzteile ermöglicht. Bevorzugt sollen die Montierten Rohrverbindungen dennoch über einen langen Zeitraum und trotz mechanischer Belastungen sicher und dicht sein.

Erfindungsgemäß wird die voranstehende Aufgabe durch ein Verrohrungssystem bzw. ein Verfahren zu dessen Herstellung mit den Merkmalen der unabhängigen Patentansprüche gelöst. Bevorzugte Ausführungsformen des erfindungsgemäßen Verrohrungssystems bzw. des erfindungsgemäßen Herstellungsverfahrens sind Gegenstand der jeweiligen abhängigen Ansprüche.

Danach weist ein Rohr eines erfindungsgemäßen Verrohrungssystems wenigstens eine longitudinale Richtung auf, welche der Durchflussrichtung eines das Rohr durchtretenden Mediums im wesentlichen entspricht, sowie wenigstens einem ersten Rohrumfang. Die Wandung des Rohres besteht in Richtung des ersten Rohrumfangs bzw. im Verlauf entlang des Rohrumfangs, d. h. aus der Sicht eines sich entlang des Rohrumfangs um das Rohr herum bewegenden Betrachters, aus zumindest einem ersten Bereich welcher aus einem ersten, im wesentlichen unelastischen thermoplastischen Kunststoff besteht sowie wenigstens einem zweiten Bereich, welcher aus einem zweiten, elastischen Material besteht. Sowohl der erste als auch der zweite Bereich erstrecken sich dabei im wesentlichen in longitudinaler Richtung des Rohres, d. h. die Wandung des Rohres ist vorzugsweise über dessen gesamte Länge in Umfangsrichtung segmentweise in wenigstens den ersten und den zweiten Bereich unterteilt.

Besonders bevorzugt besteht zwischen dem ersten, im wesentlichen unelastischen Material des oder der ersten Bereiche sowie zwischen dem zweiten, elastischen Material des oder der zweiten Bereiche eine stoffschlüssige und/oder formschlüssige Verbindung, die besonders bevorzugt in einem Mehrkomponenten-Kunststoffverarbeitungsprozess hergestellt wird.

In erfindungsgemäßer Weise ist erkannt worden, dass, in Abkehr zur bisherigen Praxis zur Herstellung von Rohrverbindungen bei Verrohrungssystemen, Dichtungen und Toleranzen nicht allein durch Zusatzteile oder thermische oder mechanische Veränderung des Rohrdurchmessers durch Aufweiten oder Schrumpfen erzeugt werden sollten, sondern es ausreichend und sogar vorteilhaft ist, eine radiale Flexibilität des Rohres, also geringfügige gewollte Veränderungen des Rohrdurchmessers durch Spreiz- oder Stauchkräfte, durch die Einfügung von sich in longitudinaler Richtung des Rohres erstreckenden zweiten Bereichen, bestehend aus einem elastischen Material, in die im übrigen aus einem oder mehreren ersten Bereichen aus einem im wesentlichen unelastischen Material bestehende Rohrwandung bereit zu stellen.

Dadurch sowie durch die nachfolgend beschriebenen Ausführungsformen ist es möglich, Rohre von Verrohrungssystemen derart zu fertigen, dass sie anwendungsspezifische und bauteilbezogene Toleranzen verschiedener Schnittstellen stufenlos ausgleichen können, was dazu führt, dass einfache form- und/oder kraftschlüssige Montagen von Rohren von erfindungsgemäßen Verrohrungssystemen untereinander aber auch mit Anschlussstutzen mit genau definierten mechanischen und Dichtigkeitseigenschaften - trotz des Vorliegens von Maßtoleranzen-möglich sind.

Bei einer bevorzugten Ausführungsform hat das oder haben die den zweiten Bereiche bildenden Segmente eine geringere Winkelausdehnung als das bzw. die den ersten Bereich bildenden Segmente. Besonders Vorzugsweise ist das Verhältnis der Winkelausdehnung des zweiten Bereichs oder der zweiten Bereiche zum ersten Bereich bzw. den ersten Bereichen kleiner als 0,4, bevorzugt kleiner als 0,3, weiter bevorzugt kleiner als 0,25, weiter bevorzugt kleiner als 0,2, weiter bevorzugt kleiner als 0,15, weiter bevorzugt kleiner als 0,1, weiter bevorzugt kleiner als 0,05, jedoch jedenfalls größer als 0,01.

Im Falle einer Mehrzahl von ersten und zweiten Bereichen kann das Verhältnis der Winkelausdehnung des jedes zweiten Bereichs zum jeweils unmittelbar daran anliegenden ersten Bereich gleich sein (symmetrische Anordnung der ersten und zweiten Bereiche in Umfangsrichtung), muss dies jedoch nicht, so dass auch unsymmetrische Anordnung der ersten und zweiten Bereiche in Umfangsrichtung vorliegen können.

Die Wandung eines Rohrs eines erfindungsgemäßen Verrohrungssystems weist somit wenigstens einen sich in longitudinaler Richtung erstreckenden zweiten Bereich auf, der aus einem elastischen Material besteht. Im Falle einer Mehrzahl von sich in longitudinaler Richtung erstreckenden zweiten Bereichen können diese gleichermaßen aus ein und demselben elastischen Material bestehen wie auch aus einer Mehrzahl unterschiedlicher elastischer Materialien bestehen.

Ebenso kann wenigstens ein zweiter Bereich des Rohrs in longitudinaler Richtung aus einer Mehrzahl unterschiedlicher elastischer Materialien bestehen, d. h. dass beispielsweise ein erster Rohrabschnitt des Rohrs einen zweiten Bereich aus einem ersten elastischen Material aufweist und ein sich daran an schließender Rohrabschnitt einen zweiter Bereich aus einem weiteren, unterschiedlichen elastischen Material aufweisen kann. Eine solche Konfiguration kann sich mehrfach fortsetzen, so dass über die Länge des Rohres unterschiedliche elastische Materialien bei der Bildung des zweiten Bereichs zum Einsatz kommen können.

Durch die vorstehende(n) Ausführungsforme(n) kann in Verbindung mit der Wahl des oder der elastischen Materialien (mit spezifischen Materialeigenschaften) eine genau definierte "geometrische" radiale Flexibilität des Rohrs zur Verfügung gestellt werden, also eine definierte flexible Vergrößerung oder Verkleinerung des Rohrdurchmessers. Ebenso kann eine genau definierte "Federhärte" der Flexibilität des Rohrs hergestellt werden, also eine definierte Rückstellkraft, mit der das Rohr auf eine Veränderung seines Durchmessers durch Stauchung oder Aufweitung reagiert.

Vorzugsweise erstreckt sich der zweite Bereich über die gesamte Länge des Rohres in einer longitudinalen Richtung. Alternativ kann die Erstreckung des zweiten Bereichs über die gesamte Länge des Rohres auch eine oder mehrere Unterbrechungen aufweisen, so dass in diesen Bereichen die Wandung des Rohres in Umfangsrichtung lediglich einen ersten und keinen zweiten Bereich aufweist, somit also in diesen Bereichen nur eine Materialkomponente zur Bildung der Wandung des Rohres zum Einsatz kommt.

Die Erstreckungsrichtung des zweiten Bereiches oder der zweiten Bereiche im Sinne der vorliegenden Erfindung ist dabei auch dann noch als im Sinne der vorliegenden Erfindung longitudinal anzusehen, wenn eine geringfügige Abweichung der Erstreckungsrichtung von der geometrisch exakten longitudinalen Erstreckungsrichtung des Rohres, beispielsweise um bis zu einigen wenigen Winkelgraden, vorliegt und somit eine Erstreckung des zweiten Bereiches oder der zweiten Bereich über eine größere Länge des Rohres in Form einer Schraubenlinie entlang des Rohrumfangs und um dieses herum erfolgt.

Bei einer bevorzugten Ausführungsform sind zumindest Teile des oder der ersten Bereiche der Wandung des Rohres mit dem zweiten, elastischen Material überzogen, so dass sich in diesen Bereichen faktisch eine Doppelwandigkeit ergibt, wobei vorzugsweise die erste, im wesentlichen unelastische erste Materialkomponente auf der Außenseite der Wandung des Rohres angeordnet ist und die zweite, elastische Materialkomponente auf der Innenseite der Wandung des Rohres vorliegt. Hierbei ist somit zumindest ein Teil, vorzugsweise aber der ganze erste Bereich (oder die ganzen ersten Bereiche) der Wandung vorzugsweise innenseitig mit dem zweiten, elastischen Material überzogen.

Bevorzugt ist dieser Überzug über die gesamte Länge des Rohres vorgesehen, jedoch sind auch Anwendungen möglich, in denen ein entsprechender innenseitiger Überzug des ersten Bereichs der Wandung des Rohres mit dem elastischen Material lediglich in einem oder mehreren Rohrabschnitten (in longitudinaler Richtung) vorgesehen ist.

Durch den Überzug des ersten Bereichs oder Teilen hiervon mit dem elastischen Material wird zum Einen in diesen Bereichen eine Doppelwandigkeit erzielt und damit gegebenenfalls verbesserte mechanischen Eigenschaften des Rohres, zum Anderen weist die elastische Materialkomponente gegebenenfalls einen höheren Reibbeiwert auf, so dass hierdurch eine verbesserte Haftung zwischen zwei miteinander verbundenen Rohren oder eines auf oder in einen Anschlussstutzen auf- bzw. eingesteckten Rohres erzielt wird.

Bei einer Ausführungsform der Erfindung stellt die Wandung des Rohrs im zweiten Bereich oder den zweiten Bereichen nicht lediglich eine kontinuierliche Fortführung der Wandstärke bzw. Krümmung der Wandung des Rohrs in dem bzw. den ersten Bereich(en) dar, was für sich genommen eine bevorzugte Ausführungsform der Erfindung ist, sondern weist ein, in Querschnittsansicht des Rohres, ausgebeultes oder eingedelltes Profil auf. Die Wandstärke kann dabei gleichförmig mit der Wandstärke des ersten Bereichs sein oder aber hiervon verschieden und beispielsweise eine Verdickung aufweisen.

Durch eine derartige Profilierung weist der zweite Bereich eine geringfügig gegenüber der kontinuierlich weiter geführten Krümmung der Wandung des ersten Bereichs vergrößerte Oberfläche auf, was je nach Anwendungsfall, also je nach dem ob der entsprechende Bereich weiblicher oder männlicher Teil einer Steckverbindung ist, zu einer Beeinflussung der mechanischen Eigenschaften und insbesondere der Flexibilität des zweiten, elastischen Materials im auf- bzw. eingesteckten Zustand führt.

Beispielsweise führt ein geringfügig ausgebeulter zweiter Bereich im Falle eines (männlichen) Einsteckens des Rohres in einen (weiblichen) Anschlussstutzen zu einer ebenso geringfügigen Kompression des elastischen Materials, was zu einer spreizenden Kraftwirkung in Umfangsrichtung führt und wodurch der Sitz der Verbindung gesichert wird. Im umgekehrten Fall eines eingedellten zweiten Bereichs führt ein (weibliches) Aufstecken des Rohres auf einen (männlichen) Anschlussstutzen zu einer Spreizung des elastischen Materials und dadurch, aufgrund dessen Rückstellkraft zu einer Zugkraft in Umfangsrichtung, was ebenfalls zu einer Fixierung und gegebenenfalls Abdichtung der Steckverbindung führt.

Diese Ausführungsformen des zweiten Bereichs erlauben es, vorzugsweise in Verbindung mit den weiter oben beschrieben Merkmalen, Rohre mit exakt definierten mechanischen Eigenschaften hinsichtlich der Veränderung ihres Durchmessers durch Stauchung und Aufweitung bereitzustellen, so dass beispielsweise eine Durchmesserveränderung im Bereich weniger Prozent leicht erfolgt und lediglich eine geringe Rückstellkraft hervorruft, eine geringfügig darüber hinaus gehende Durchmesserveränderung allerdings zu einer erheblich stärkeren Rückstellkraft führt, so dass hierdurch bei dennoch leichtem Ein- bzw. Aufstecken ein sicherer Sitz erzeugt wird.

Bei dem zweiten, elastischen Material des zweiten Bereichs bzw. der zweiten Bereich handelt es sich bevorzugt um einen Werkstoff aus der Gruppe der thermoplastischen Elastomere (TPE). Alternativ oder zusätzlich hierzu kann das Elastomer auch vernetzbar sei, wodurch die Herstellung erfindungsgemäßer Verrohrungssysteme vereinfacht erfolgen kann.

Bei einem erfindungsgemäßen Verfahren zur Herstellung eines Verrohrungssystems mit wenigstens einem Rohr wird das Rohr mittels einer Co-Extrusion oder eines Mehrkomponenten-Spritzgussverfahrens hergestellt, bei welcher die im ersten Schritt aus einem ersten, unelastischen thermoplastischen Material hergestellte Rohrwandung wenigstens einen sich in longitudinaler Richtung erstreckenden freibleibenden Bereich Aufweist, also in Umfangsrichtung wenigstens eine Lücke, und der freibleibende Bereich im darauf folgenden Schritt mit einem zweiten, elastischen Material gefüllt wird, wobei die Materialstärke des zweiten Materials im freibleibenden Bereich in einer bevorzugten Ausführungsform der Materialstärke des ersten Materials im wesentlichen entspricht.

Alternativ kann die Materialstärke des zweiten Materials im freibleibenden Bereich zumindest teilweise größer oder kleiner als die Materialstärke des ersten Materials sein. In jedem Fall kann allerdings dem zweiten Material bei der Befüllung des freibleibenden Bereichs eine Profilierung gegeben werden, beispielsweise eine ausgebeulte oder aber eingedellte Profilierung.

Durch die Co-Extrusion bzw. das Mehrkomponenten-Spritzgussverfahren erfolgt eine innige, stoffschlüssige Verbindung des ersten Materials mit dem zweiten Material, so dass im Ergebnis ein aus wenigstens zwei Materialkomponenten bestehendes, in Umfangsrichtung dennoch einstückiges Rohr entsteht.

Bei einer bevorzugten Ausführungsform ist der oder sind die freibleibenden Bereiche Kreissegmente mit einer geringeren Winkelausdehnung als der bzw. die aus dem ersten Material gebildeten Rohrwandungssegmente. Besonders Vorzugsweise ist das Verhältnis der Winkelausdehnung des freibleibenden Bereichs oder der freibleibenden Bereiche zum dem bzw. den Rohrwandungssegmente(n) kleiner als 0,4, bevorzugt kleiner als 0,3, weiter bevorzugt kleiner als 0,25, weiter bevorzugt kleiner als 0,2, weiter bevorzugt kleiner als 0,15, weiter bevorzugt kleiner als 0,1, weiter bevorzugt kleiner als 0,05, jedoch jedenfalls größer als 0,01.

Bei einer Ausführungsform der Erfindung erfolgt im zweiten Schritt der Co-Extrusion bzw. des Mehrkomponenten-Spritzgussverfahrens mit der Befüllung des bzw. der freibleibenden Bereiche auch ein vorzugsweise vollflächiger Überzug der aus dem ersten Material bestehenden Rohrwandungssegmente, so dass ein Rohr des erfindungsgemäßen Verrohrungssystems entsteht, welches im Bereich des ersten Materials eine Mehrwandigkeit aufweist, mit einem außen und/oder innen liegenden Überzug des ersten Materials mit dem zweiten Material, so dass außen und/oder innenseitig eine geschlossene Oberfläche bestehend aus dem zweiten Material entsteht.

Weitere Merkmale der vorliegenden Erfindung ergeben sich aus der nachfolgenden detaillierten Beschreibung eines Ausführungsbeispiels der Erfindung in Verbindung mit den Ansprüchen und der Zeichnung. In der Zeichnung zeigt:
- Fig. 1: in einer schematischen Darstellung, eines Ausführungsbeispiels eines Rohrs eines erfindungsgemäßen Verrohrungssystems;
- Fig. 2: eine Querschnittsansicht eines Teils des in Figur 1 gezeigten Rohrs;
- Fig. 3a: in eine teilweise Darstellung eines Querschnitts eines männlichen Verbindungsabschnitts des Rohrs gemäß Fig. 1;
- Fig. 3b: in eine teilweise Darstellung des Querschnitts des männlichen Verbindungsabschnitts des Rohrs gemäß Fig. 1 in einem eingesteckten Zustand;
- Fig. 4a: in eine teilweise Darstellung eines Querschnitts eines weiblichen Verbindungsabschnitts des Rohrs gemäß Fig. 1;
- Fig. 4b: in eine teilweise Darstellung des Querschnitts des weiblichen Verbindungsabschnitts des Rohrs gemäß Fig. 1 in einem aufgesteckten Zustand.

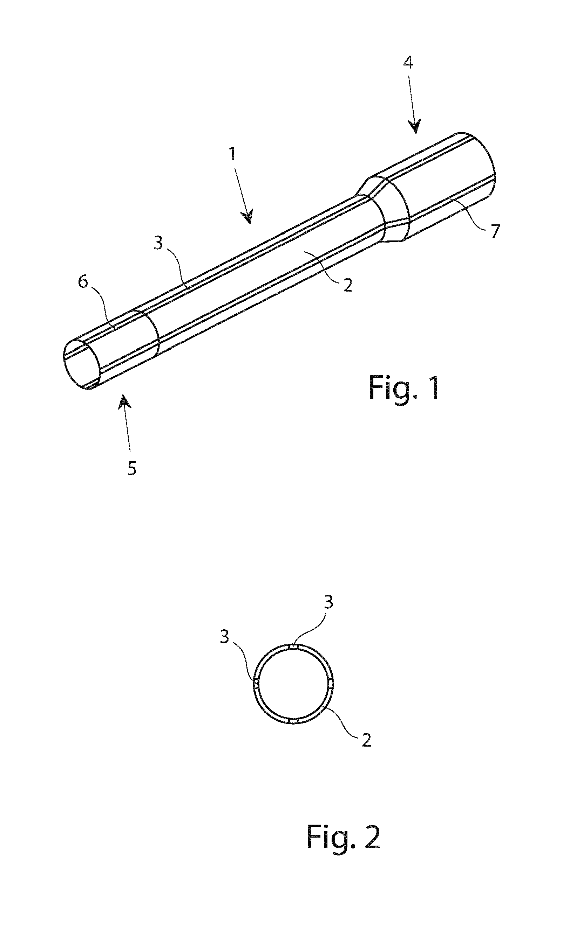

Ein erfindungsgemäßes Verrohrungssystem kann ein oder mehrere Rohre umfassen, wobei in Fig. 1 beispielhaft nur ein Rohr 1 gezeigt ist, das eine longitudinale Richtung aufweist, welche der Durchflussrichtung eines das Rohr 1 durchtretenden Mediums im wesentlichen entspricht. Das Rohr 1 weist eine ersten, männlichen Anschlussbereich 5 mit einem ersten Durchmesser bzw. Umfang und einen zweiten weiblichen Anschlussbereich 4 mit einem zweiten Durchmesser bzw. Umfang auf, wobei die Anschlussbereiche 4, 5 so ausgebildet sind, dass sie korrespondieren. Alternativ oder zusätzlich können die Anschlussbereiche für einen Anschluss des Rohres an ein Anschlussstutzen einer weiteren Gerätschaft ausgebildet sein.

Das in Fig. 1 gezeigte Rohr weist eine Rohrwandung auf, die in Umfangsrichtung vier erste Bereiche 2 umfasst, die aus einem im wesentlichen unelastischen thermoplastischen Kunststoff bestehen, sowie vier jeweils dazwischen angeordnete zweite Bereiche 3. Zum besseren Verständnis dieser Konfiguration wird außerdem auf Fig. 2 verwiesen, die einen Querschnitt des Rohres 1 im Bereich zwischen dem zweiten und ersten Anschlussbereich 4, 5 zeigt. Deutlich erkennbar besteht die Rohrwandung des Rohres 1 aus segmentweise sich abwechselnden ersten und zweiten Bereichen 2, 3, die zur Symmetrieachse des Rohres ebenfalls symmetrisch angeordnet sind.

In dem in Fig. 2 gezeigten Fall ist der Kreissegmentwinkel der ersten Bereiche 76° und der der zweiten Bereiche 14°, so dass ein Verhältnis der Winkelausdehnung des zweiten Bereichs oder der zweiten Bereiche zum ersten Bereich bzw. den ersten Bereichen von ca. 0,184 vorliegt. Hiervon abweichende Winkelverhältnisse sind je nach Anwendungsfall ebenfalls beliebig wählbar. Ebenfalls in Fig. 2 (sowie den weiteren Figuren) ist auch deutlich erkennbar, dass der/die zweiten Bereiche eine der Wandstärke des/der ersten Bereiche entsprechende Wandstärke aufweisen.

Aus Fig. 1 ist erkennbar, dass die zweiten Bereiche sich entlang der longitudinalen Richtung des Rohres 1 über dessen gesamte Länge unterbrechungsfrei erstrecken. Obgleich eine derartige Anordnung bevorzugt ist, besteht auch die Möglichkeit, dass die zweiten Bereiche sich nicht über die vollständige Länge des Rohres unterbrechungsfrei erstrecken sondern es besteht auch die Möglichkeit, dass sie in Teilbereichen des Rohres nicht vorliegen, so dass in diesen Bereichen der Rohrquerschnitt ausschließlich aus dem ersten unelastischen Material besteht. Bevorzugt ist allerdings eine durchgehende Erstreckung der zweiten Bereiche, über verschiedene in der longitudinalen Richtung des Rohres 1 angeordnete Bereiche, wie beispielsweise die Anschlussbereiche 4, 5, der dazwischen liegende Bereich und überdies der Bereich in dem sich der Rohrquerschnitt vom ersten auf den zweiten Durchmesser vergrößert.

Bei dem Rohr des erfindungsgemäßen Verrohrungssystems kann es sich überdies auch um ein Wellrohr handeln, wobei in diesem Fall, erste und zweite Bereiche entlang der undulierenden Durchmesserveränderungen des Rohrdurchmessers des Wellrohrs mit verlaufen.

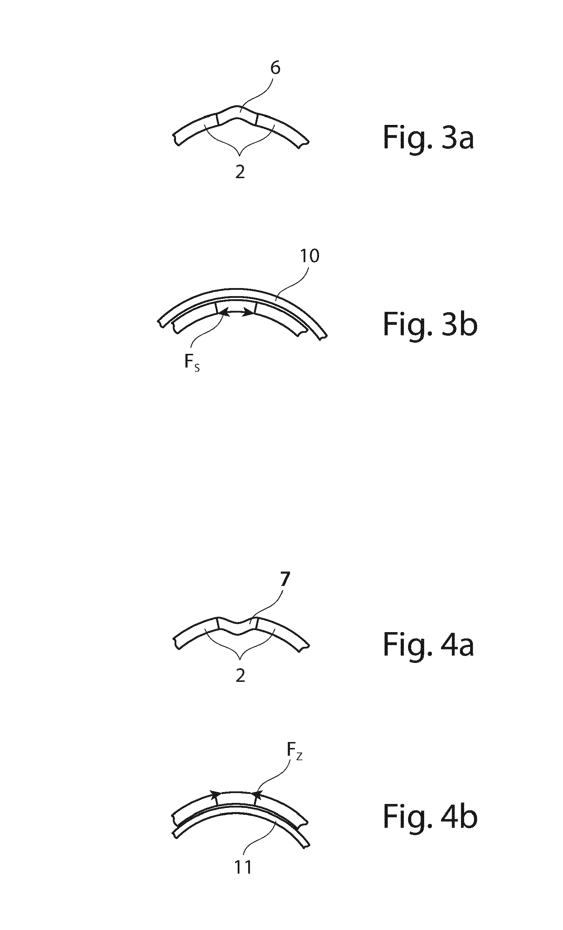

Wie sich aus den Figuren 1 und 3a ergibt ist der zweite Bereich 6 im Bereich des ersten Anschlussbereichs 5 profiliert ausgeführt und zwar in der Form, dass bei gleichbleibender Materialstärke der Wandung des Rohres im zweiten Bereich 6 und den daran angrenzenden ersten Bereichen 2 eine geringfügige, radial nach Außen gerichtete Ausbeulung des zweiten Bereichs 6 vorliegt. Entlang des Umfangs des Rohres 1 weist dieses somit im ersten Anschlussbereich 5 jeweils an den Positionen der zweiten Bereiche 6 einen geringfügig vergrößerten Durchmesser als im Bereich der ersten Bereiche 2 auf.

Durch die Elastizität des zweiten Materials erfolgt, wie in Fig. 3b dargestellt, beim Einstecken des Rohres in eine weibliche Aufnahme 10 eine Verformung der elastischen Materialkomponente des zweiten Bereichs radial nach innen, die zu einer Stauchung des Materials führt und hierdurch durch den zweiten Bereich 6 bzw. die zweiten Bereiche eine spreizende Kraft Fₛ definierter Größe auf die Rohrwandung aufgebaut wird.

Die Größe der spreizenden Kraft Fₛ kann durch die Menge des durch die Stauchung radial nach innen gedrückten Materials ebenso wie die konkrete Materialwahl des zweiten Materials beeinflusst werden und durch die Kombination aus breite des zweiten Bereichs, radialer Größe der Ausbeulung, Materialparameter und Geometrie der Ausbeulung sehr definiert eingestellt werden.

Insbesondere kann durch diese Ausbildung der zweiten Bereiche 6 auch eine Maßtoleranzen ausgleichende Funktion des ersten Anschlussbereichs 5 hergestellt werden.

Bezüglich der Verhältnisse beim zweiten, weiblichen Anschlussbereich 4, welche in den Figuren 1, 4a und 4b gezeigt sind gilt ähnliches: Der bzw. die zweiten Bereiche 7 im Bereich des zweiten Anschlussbereichs 4 sind profiliert ausgeführt und zwar in der Form, dass bei gleichbleibender Materialstärke der Wandung des Rohres im zweiten Bereich 7 und den daran angrenzenden ersten Bereichen 2 eine geringfügige, radial nach Innen gerichtete Ausbeulung des zweiten Bereichs 7 vorliegt. Entlang des Umfangs des Rohres 1 weist dieses somit im zweiten Anschlussbereich 4 jeweils an den Positionen der zweiten Bereiche 7 einen geringfügig verkleinerten Durchmesser als im Bereich der ersten Bereiche 2 auf.

Durch die Elastizität des zweiten Materials erfolgt, wie in Fig. 4b dargestellt, beim Aufstecken des Rohres 1 auf eine männliche Aufnahme 11 mit einem geringfügig über dem Innendurchmesser des zweiten Anschlussbereichs 4 des Rohres 1 liegenden Außendurchmesser eine Verformung der elastischen Materialkomponente des zweiten Bereichs radial nach Außen, die, durch die gleichzeitige geringfügige erzwungene Vergrößerung des Durchmessers des Rohres 1 im zweiten Anschlussbereich 4 zu einer Streckung des Materials führt und hierdurch durch den zweiten Bereich 7 bzw. die zweiten Bereiche eine Zugkraft F_{z} definierter Größe auf die zweite Materialkomponente des zweiten Bereichs 7 der Rohrwandung ausgeübt wird.

Die Größe der Zugkraft F_{z} kann durch die Größe der Spreizung ebenso wie die konkrete Materialwahl des zweiten Materials beeinflusst werden und durch die Kombination aus breite des zweiten Bereichs, radialer Größe der Ausbeulung, Materialparameter und Geometrie der Ausbeulung sehr definiert eingestellt werden. Insbesondere kann durch diese Ausbildung der zweiten Bereiche 7 eine Maßtoleranzen ausgleichende Funktion des zweiten Anschlussbereichs 4 hergestellt werden.

Hinsichtlich weiterer Details wird zur Vermeidung von Wiederholungen auf die allgemeine Beschreibung und die Patentansprüche verwiesen. Schließlich sei darauf hingewiesen, dass sämtliche in der allgemeinen Beschreibung sowie dem Ausführungsbeispiel beschriebenen Merkmale in jedweder Kombination zur Anwendung kommen können.

## Patentansprüche

1. Verrohrungssystem mit mindestens einem Rohr (1), wobei das Rohr (1) wenigstens eine longitudinale Richtung aufweist, welche der Durchflussrichtung eines das Rohr (1) durchtretenden Mediums im wesentlichen entspricht, und wenigstens einem ersten Rohrumfang, wobei die Wandung des Rohrs (1) in Richtung des ersten Rohrumfangs aus zumindest einem ersten Bereich (2) aus einem ersten, thermoplastischen, im wesentlichen unelastischen Kunststoffmaterial besteht,
**dadurch gekennzeichnet, dass**
das die Wandung des Rohrs (1) kreissegmentartig, im Verlauf entlang des ersten Rohrumfangs zumindest einem zweiten Bereich (2) aufweist, welcher aus einem zweiten, elastischen Material besteht, und
sich der erste und der zweite Bereich (2, 3) im wesentlichen in longitudinaler Richtung des Rohrs (1) erstrecken.

2. Verrohrungssystem nach Anspruch 1, **dadurch gekennzeichnet, dass** mehrere erste Bereiche (2) und mehrere zweite Bereiche (3) symmetrisch um die longitudinale Achse des Rohres herum angeordnet sind und/oder die Ausdehnung mehrerer erster Bereiche (2) in Richtung des Rohrumfangs und Ausdehnung mehrerer zweiter Bereiche (3) in Richtung des Rohrumfangs im wesentlichen gleich sind.

3. Verrohrungssystem nach Anspruch 1 oder 2, **dadurch gekennzeichnet, dass** das zwischen dem ersten Material und dem zweiten Material eine stoff- und/oder formschlüssige Verbindung besteht.

4. Verrohrungssystem nach einem der vorhergehenden Ansprüche, **dadurch gekennzeichnet, dass** das den zweiten Bereiche (3) bildenden Kreissegment eine geringere Winkelausdehnung als das den ersten Bereich (2) bildende Kreissegment aufweist und das Verhältnis der Winkelausdehnungen des Kreissegments des zweiten Bereichs (3) zur Winkelausdehnungen des Kreissegments des ersten Bereichs (2) kleiner als 0,4, bevorzugt kleiner als 0,3, weiter bevorzugt kleiner als 0,25, weiter bevorzugt kleiner als 0,2, weiter bevorzugt kleiner als 0,15, weiter bevorzugt kleiner als 0,1, weiter bevorzugt kleiner als 0,05, jedoch jedenfalls größer als 0,01.

5. Verrohrungssystem nach einem der vorhergehenden Ansprüche, **dadurch gekennzeichnet, dass** das die zweiten Bereiche (3) bildende zweite, elastische Material für unterschiedliche der zweiten Bereiche (3) verschieden ist und/oder das einen zweiten Bereich (3) bildende zweite, elastische Material im Verlauf der longitudinalen Richtung des Rohrs (1) Abschnittsweise verschieden ist.

6. Verrohrungssystem nach einem der vorhergehenden Ansprüche, **dadurch gekennzeichnet, dass** sich der zweite Bereich (3) im wesentlichen in longitudinaler Richtung entlang der gesamten Länge des Rohrs (1) erstreckt und/oder der sich in longitudinaler Richtung entlang des Rohrs (1) erstreckende zweite Bereich (3) wenigstens eine Unterbrechung aufweist.

7. Verrohrungssystem nach einem der vorhergehenden Ansprüche, **dadurch gekennzeichnet, dass** zumindest Teile des oder der ersten Bereiche der Wandung des Rohres an dessen bzw. deren Innenradius (an der Rohrinnenseite) und/oder an dessen bzw. deren Außenradius (an der Rohraußenseite) mit dem zweiten, elastischen Material überzogen sind und vorzugsweise die gesamte Rohrinnenseite der Rohrwandung aus dem zweiten, elastischen Material besteht.

8. Verrohrungssystem nach einem der vorhergehenden Ansprüche, **dadurch gekennzeichnet, dass** die Wandung des Rohrs im zweiten Bereich oder den zweiten Bereichen ein Profil aufweist, vorzugsweise ein eingedelltes oder ausgebeultes Profil aufweist.

9. Verrohrungssystem nach einem der vorhergehenden Ansprüche, **dadurch gekennzeichnet, dass** die Wandstärke der Rohrwandung im zweiten Bereich der Wandstärke der Rohrwandung im ersten Bereich im wesentlichen entspricht oder dass die Wandstärke der Rohrwandung im zweiten Bereich eine Verdickung gegenüber der Wandstärke der Rohrwandung im ersten Bereich aufweist.

10. Verrohrungssystem nach einem der vorhergehenden Ansprüche, **dadurch gekennzeichnet, dass** das zweite, elastische Material ein Werkstoff aus der Gruppe der thermoplastischen Elastomere ist und/oder das zweite, elastische Material vernetzbar ist.

11. Verrohrungssystem nach einem der vorhergehenden Ansprüche, **dadurch gekennzeichnet, dass** das Rohr eine Mehrzahl verschiedener Rohrumfänger aufweist und insbesondere, ein Wellrohr ist.

12. Verfahren zur Herstellung eines Verrohrungssystems mit wenigstens einem Rohr (1) bei welchem im Rahmen einer Co-Extrusion oder eines das Mehrkomponenten-Spritzgussverfahrens eine in einem ersten Schritt aus einem ersten, unelastischen thermoplastischen Material hergestellte Rohrwandung wenigstens einen sich in longitudinaler Richtung erstreckenden freibleibenden Bereich Aufweist, und der freibleibende Bereich im darauf folgenden Schritt mit einem zweiten, elastischen Material gefüllt wird.

13. Verfahren gemäß Anspruch 11, **dadurch gekennzeichnet, dass** der oder die freibleibenden Bereiche mit dem zweiten Material so gefüllt werden, dass die Materialstärke des zweiten Materials im freibleibenden Bereich der Materialstärke des ersten Materials im wesentlichen entspricht oder dass die Materialstärke des zweiten Materials im freibleibenden Bereich zumindest teilweise größer oder kleiner als die Materialstärke des ersten Materials ist und/oder dass dem zweiten Material bei der Befüllung des freibleibenden Bereichs eine Profilierung gegeben wird, vorzugsweise eine ausgebeulte oder aber eingedellte Profilierung gegeben wird.

14. Verfahren gemäß Anspruch 11 oder 12, **dadurch gekennzeichnet, dass** der oder die freibleibenden Bereiche Kreissegmente mit einer geringeren Winkelausdehnung als der bzw. die aus dem ersten Material gebildeten Rohrwandungssegmente sind und das Verhältnis der Winkelausdehnung des oder der freibleibenden Bereiche zu dem bzw. den Rohrwandungssegmente(n) kleiner als 0,4, bevorzugt kleiner als 0,3, weiter bevorzugt kleiner als 0,25, weiter bevorzugt kleiner als 0,2, weiter bevorzugt kleiner als 0,15, weiter bevorzugt kleiner als 0,1, weiter bevorzugt kleiner als 0,05, jedoch jedenfalls größer als 0,01.

15. Verfahren gemäß einem der Ansprüche 11 bis 13, **dadurch gekennzeichnet, dass** im zweiten Schritt der Co-Extrusion oder des Mehrkomponenten-Spritzgussverfahrens mit der Befüllung des bzw. der freibleibenden Bereiche auch ein, vorzugsweise vollflächiger, Überzug der aus dem ersten Material bestehenden Rohrwandungssegmente erfolgt, so dass die aus dem ersten Material bestehenden Rohrwandungssegmente einen außen und/oder innen liegenden, vorzugsweise vollflächigen, Überzug aus dem zweiten Material aufweisen.
